# EUROPÄISCHE PATENTANMELDUNG

(11) **EP 3 576 284 A1**
(43) Veröffentlichungstag der Anmeldung: **04.12.2019**
(21) Anmeldenummer: 18174998.7
(22) Anmeldetag: 30.05.2018
(51) Int. Cl.: H02M 7/5387, H02M 1/32

(54) **ELEKTRISCHES KOPPELN EINES ERSTEN ELEKTRISCHEN NETZES MIT EINEM ZWEITEN ELEKTRISCHEN NETZ**

(71) Anmelder: Siemens Aktiengesellschaft, 80333 München (DE)
(72) Erfinder: Benesch, Norbert, 90562 Heroldsberg (DE); Wießmann, Harald, 91058 Erlangen (DE); Bauer, Franz, 91074 Herzogenaurach (DE)

(57) **Zusammenfassung**

Die Erfindung betrifft ein Verfahren zum Betreiben eines Energiewandlers (10), der ein erstes elektrisches Netz (12) mit einem zweiten elektrischen Netz (14) koppelt, indem der Energiewandler (10) elektrische Energie mittels wenigstens einem Schaltelement (22) wandelt, wobei:
- das wenigstens eine Schaltelement (22) derart in einem Schaltbetrieb betrieben wird, dass der Energiewandler (10) eine vorgegebene Energiewandlungsfunktionalität bereitstellt, und
- ein Netzstrom für eines der Netze (12, 14) abhängig von einem Vergleich des Netzstroms mit einem Vergleichsstrom eingestellt wird,
- ein erster Betriebsmodus für den Schaltbetrieb bereitgestellt wird, bei dem eine elektrische Spannung an dem einen der Netze (12, 14) mittels eines PWM-Verfahrens abhängig von dem Vergleich eingestellt wird, und
- ein zweiter Betriebsmodus bereitgestellt wird, bei dem das Schaltelement (22) dann geschaltet wird, wenn bei dem Vergleich eine Differenz zwischen dem Netzstrom und dem Vergleichsstrom größer als ein erster vorgegebener relativer Schaltwert und/oder kleiner als ein zweiter vorgegebener relativer Schaltwert ist.

## Beschreibung

Die Erfindung betrifft einen Energiewandler zum elektrischen Koppeln eines ersten elektrischen Netzes mit einem zweiten elektrischen Netz, mit wenigstens einem Schaltelement, und einer mit dem wenigstens einen Schaltelement elektrisch gekoppelte Steuereinheit, die ausgebildet ist, das wenigstens eine Schaltelement derart in einem Schaltbetrieb zu betreiben, dass der Energiewandler eine vorgebbare Energiewandlungsfunktionalität bereitstellt, und wobei die Steuereinheit ausgebildet ist, einen Netzstrom für eines der Netze abhängig von einem Vergleich des Netzstroms mit einem vorgebbaren Vergleichsstrom einzustellen. Die Erfindung betrifft weiterhin ein Energiewandlersystem zum elektrischen Koppeln eines ersten elektrischen Netzes mit einem zweiten elektrischen Netz, mit wenigstens zwei Energiewandlern, die jeweils an das erste elektrische Netz und an das zweite elektrische Netz anschließbar sind. Die Erfindung betrifft ferner ein Verfahren zum Betreiben eines Energiewandlers, der ein erstes elektrisches Netz mit einem zweiten elektrischen Netz elektrisch koppelt, indem der Energiewandler elektrische Energie mittels wenigstens einem Schaltelement wandelt, wobei das wenigstens eine Schaltelement derart in einem Schaltbetrieb betrieben wird, dass der Energiewandler eine vorgegebene Energiewandlungsfunktionalität bereitstellt, und
ein Netzstrom für eines der Netze abhängig von einem Vergleich des Netzstroms mit einem vorgegebenen Vergleichsstrom eingestellt wird. Weiterhin betrifft die Erfindung ein Verfahren zum Betreiben eines Energiewandlersystems, mit dem ein erstes elektrisches Netz mit einem zweiten elektrischen Netz mittels wenigstens zwei Energiewandlern elektrisch gekoppelt wird, die jeweils an das erste elektrische Netz und an das zweite elektrische Netz angeschlossen sind.

Energiewandler, Energiewandlersysteme mit mehreren Energiewandlern sowie Verfahren zu deren Betrieb sind im Stand der Technik umfänglich bekannt, sodass es eines gesonderten druckschriftlichen Nachweises hierfür nicht bedarf. Ein Energiewandler ist eine elektrische Einrichtung, die dazu dient, das erste und das zweite elektrische Netz in vorgebbarer Weise miteinander elektrisch koppeln zu können, sodass zwischen dem ersten und dem zweiten elektrischen Netz Energie ausgetauscht werden kann. Das erste beziehungsweise zweite elektrische Netz kann beispielsweise ein Gleichspannungsnetz oder auch ein Wechselspannungsnetz, insbesondere ein mehrphasiges Wechselspannungsnetz sein. Je nach Art des elektrischen Netzes ist der Energiewandler als Gleichrichter, als Wechselrichter, als Gleichspannungswandler oder dergleichen ausgebildet.

Heutzutage werden Energiewandler in Form so genannter statischer Energiewandler eingesetzt, das heißt, dass sie anders als dynamische Energiewandler keine mechanisch bewegbaren, insbesondere rotierbaren Teile für den Zweck der Energiewandlung aufweisen. Statische Energiewandler sind in der Regel als getaktete elektrische Energiewandler ausgebildet und weisen zu diesem Zweck wenigstens eine Wandlerinduktivität und wenigstens ein Schaltelement auf, die in geeigneter Weise miteinander verschaltet und zum Beispiel an den ersten und den zweiten Anschluss angeschlossen sind, über die der Energiewandler an das erste und das zweite elektrische Netz angeschlossen ist, sodass durch Betreiben des Schaltelements in einem geeigneten Schaltbetrieb die gewünschte Wandlungsfunktion des Energiewandlers erreicht werden kann.

Ein Schaltelement im Sinne dieser Offenbarung ist dabei vorzugsweise ein steuerbares elektronisches Schaltelement, beispielsweise ein steuerbarer elektronischer Halbleiterschalter wie ein Transistor, ein Thyristor, Kombinationsschaltungen hiervon, vorzugsweise mit parallelgeschalteten Freilaufdioden, ein Gate-Turn-Off-Thyristor (GTO), ein Isolated-Gate-Bipolar-Transistor (IGBT), Kombinationen hiervon oder dergleichen. Dem Grunde nach kann das Schaltelement auch durch einen Feldeffekttransistor, insbesondere einen Metal Oxide Semiconductor Field Effect Transistor (MOSFET) gebildet sein.

Zur Bereitstellung der gewünschten Energiewandlungsfunktionalität wird das wenigstens eine Schaltelement im Schaltbetrieb betrieben. In Bezug auf einen Halbleiterschalter nach Art eines Transistors bedeutet dies, dass in einem eingeschalteten Schaltzustand zwischen den eine Schaltstrecke bildenden Anschlüssen des Transistors ein sehr geringer elektrischer Widerstand bereitgestellt wird, sodass ein hoher Stromfluss bei sehr kleiner Restspannung möglich ist. In einem ausgeschalteten Schaltzustand ist hingegen die Schaltstrecke des Transistors hochohmig, das heißt, sie stellt einen hohen elektrischen Widerstand bereit, sodass auch bei hoher, an der Schaltstrecke anliegender elektrischer Spannung im Wesentlichen kein oder ein nur sehr geringer, insbesondere vernachlässigbarer Stromfluss vorliegt. Hiervon unterscheidet sich ein Linearbetrieb bei Transistoren, der aber bei getakteten Energiewandlern in der Regel nicht zum Einsatz kommt.

Der erste sowie auch der zweite Anschluss sind entsprechend des jeweils anzuschließenden elektrischen Netzes ausgebildet, sodass eine bestimmungsgemäße Kopplung erreicht werden kann. So kann vorgesehen sein, dass bei einem Gleichspannungsnetz beziehungsweise einem einphasigen Wechselspannungsnetz der entsprechende Anschluss des Energiewandlers zumindest zwei Anschlusspole aufweist, um die zumindest zwei elektrischen Potentiale dieses elektrischen Netzes anschließen zu können. Bei einem mehrphasigen Wechselspannungsnetz können hingegen entsprechend mehrere Anschlusspole vorgesehen sein, sodass die jeweiligen Phasen des mehrphasigen Wechselspannungsnetzes bestimmungsgemäß angeschlossen werden können. Entsprechend ist die Schaltungsstruktur des Energiewandlers ausgebildet, die je nach Bedarf auch zwei oder noch mehr Wandlerinduktivitäten aufweisen kann, die vorzugsweise magnetisch nicht mit einander gekoppelt sind. Entsprechend können auch zwei oder mehrere Schaltelemente vorgesehen sein, die mittels jeweiliger Wandlerinduktivitäten elektrisch gekoppelt sind, um die gewünschte Energiewandlungsfunktionalität bereitstellen zu können.

Das wenigstens eine Schaltelement ist mit der Steuereinheit gekoppelt. Bei mehreren Schaltelementen sind vorzugsweise sämtliche der mehreren Schaltelemente mit der Steuereinheit gekoppelt. Die Kopplung ist vorzugsweise derart ausgebildet, dass jedes der Schaltelemente individuell gesteuert werden kann. Die Steuereinheit kann als elektronische Schaltung ausgebildet sein, die entsprechende Steuersignale für das wenigstens eine Schaltelement bereitstellt, sodass der gewünschte Schaltbetrieb des Schaltelements realisiert werden kann. Die elektronische Schaltung kann neben elektronischen Bauteilen zur vorgebbaren Bereitstellung der Steuersignale auch wenigstens eine programmgesteuerte Recheneinheit umfassen, um die gewünschte Funktion der Steuereinheit bereitstellen zu können. Natürlich kann die Steuereinheit auch ausschließlich aus der Rechnereinheit bestehen.

Die Steuereinheit ist ausgebildet, das wenigstens eine Schaltelement derart im Schaltbetrieb zu betreiben, dass der Energiewandler die vorgebbare Energiewandlungsfunktionalität zwischen dem ersten und dem zweiten Anschluss bereitstellt. Ferner ist die Steuereinheit ausgebildet, einen Netzstrom bei einem der Anschlüsse abhängig von einem Vergleich des Netzstroms mit einem vorgebbaren Vergleichsstrom einzustellen. Die Steuereinheit stellt also eine Regelungsfunktionalität bereit, mittels der der Netzstrom in vorgebbarer Weise eingestellt werden kann. Dadurch ist es möglich, an demjenigen Anschluss, dessen Netzstrom erfasst wird, diesen in vorgebbarer Weise zu regeln. Zum Erfassen des Netzstroms kann zum Beispiel ein geeigneter Stromsensor oder dergleichen genutzt werden. Der Stromsensor kann vom Energiewandler umfasst sein. Es kann jedoch auch vorgesehen sein, dass der Energiewandler einen Anschluss für den Stromsensor aufweist, der zum Beispiel von dem entsprechenden elektrischen Netz umfasst ist, welches mit dem geregelten Netzstrom beaufschlagt werden soll.

Auch Energiewandlersysteme sind umfänglich im Einsatz. Energiewandlersysteme weisen wenigstens zwei Energiewandler auf, die in geeigneter Weise miteinander betrieben werden, damit das Energiewandlersystem, welches ebenfalls dazu dient, zwei elektrische Netze miteinander elektrisch zu koppeln, eine gewünschte Energiewandlungsfunktionalität bereitzustellen vermag. Dabei ist zumeist vorgesehen, dass die Energiewandler in einem Parallelbetrieb betrieben werden. Die Energiewandler können wie zuvor erläutert ausgebildet sein.

Zum Regeln des Netzstroms ist es üblich, eine geeignete Regelungsfunktionalität bereitzustellen. Zu diesem Zweck können geeignete Algorithmen beziehungsweise auch Schaltmuster durch die Steuereinheit für das wenigstens eine Schaltelement bereitgestellt werden.

Im praktischen Betrieb haben sich die Energiewandler, die Energiewandlersysteme sowie auch die Verfahren zu deren Betrieb dem Grunde nach bewährt. Gleichwohl treten gerade bei dynamischen Vorgängen, beispielsweise bei Störungen in einem oder beiden der elektrischen Netze sowie auch bei einem Aktivieren beziehungsweise Deaktivieren eines der wenigstens zwei Energiewandler bei einem Energiewandlersystem Probleme auf, die die gesamte Funktionalität beeinträchtigen wenn nicht sogar stören. So ist es bei Energiewandlersystemen mittlerweile üblich, die parallelgeschalteten Energiewandler über Trenntransformatoren galvanisch zu entkoppeln. Dadurch soll bei dynamischen Vorgängen, wie dem Aktivieren beziehungsweise dem Deaktivieren eines einzelnen der Energiewandler, das Auftreten von unerwünschten zyklischen Strömen vermieden werden.

Aber auch der Betrieb eines einzelnen Wechselrichters kann weiter verbessert werden. Je nach eingesetztem Verfahren zum Regeln des Stroms können zum Beispiel Begrenzungen hinsichtlich einer Dynamik der Regelung, einer Robustheit der Regelung, ungünstige Netzrückwirkungen und hohe Schaltverluste auftreten.

Der Erfindung liegt deshalb die Aufgabe zugrunde, den Betrieb von Energiewandlern sowie Energiewandlersystemen zu verbessern und entsprechende Verfahren zu deren Betrieb anzugeben.

Als Lösung werden mit der Erfindung ein Energiewandler, ein Energiewandlersystem, ein Verfahren zum Betreiben eines Energiewandlers sowie ein Verfahren zum Betreiben eines Energiewandlersystems gemäß den unabhängigen Ansprüchen vorgeschlagen.

Vorteilhafte Weiterbildungen ergeben sich durch Merkmale der abhängigen Ansprüche.

Bezüglich eines gattungsgemäßen Energiewandlers wird insbesondere vorgeschlagen, dass die Steuereinheit ausgebildet ist, einen ersten Betriebsmodus für den Schaltbetrieb zum Einstellen einer elektrischen Spannung an dem einen der Netze mittels eines PWM-Verfahrens abhängig von dem Vergleich bereitzustellen, und einen zweiten Betriebsmodus für den Schaltbetrieb bereitzustellen, in dem das wenigstens eine Schaltelement dann geschaltet wird, wenn bei dem Vergleich eine Differenz zwischen dem Netzstrom und dem vorgebbaren Vergleichsstrom größer als ein erster vorgebbarer relativer Schaltwert und/oder kleiner als ein zweiter vorgebbarer relativer Schaltwert ist.

Bezüglich eines gattungsgemäßen Verfahrens zum Betreiben des Energiewandlers wird insbesondere vorgeschlagen, dass ein erster Betriebsmodus für den Schaltbetrieb bereitgestellt wird, bei dem eine elektrische Spannung an dem einen der Netze mittels eines PWM-Verfahrens abhängig von dem Vergleich eingestellt wird, und ein zweiter Betriebsmodus bereitgestellt wird, bei dem das Schaltelement dann geschaltet wird, wenn bei dem Vergleich eine Differenz zwischen dem Netzstrom und dem vorgegebenen Vergleichsstrom größer als ein erster vorgegebener relativer Schaltwert und/oder kleiner als ein zweiter vorgegebener relativer Schaltwert ist.

Bezüglich eines gattungsgemäßen Energiewandlersystems wird insbesondere vorgeschlagen, dass die Energiewandler gemäß der Erfindung ausgebildet sind.

Bezüglich eines gattungsgemäßen Verfahrens zum Betreiben eines Energiewandlersystems wird insbesondere vorgeschlagen, dass die Energiewandler nach einem Verfahren der Erfindung betrieben werden.

Die Erfindung basiert auf dem Gedanken, dass der Betrieb des Energiewandlers beziehungsweise des Energiewandlersystems durch geeignete Auswahl eines Betriebsmodus in gewünschter Weise angepasst werden kann, um die gesamte Funktionalität auch bei dynamischen Vorgängen in Bezug auf die elektrischen Netze oder auch in Bezug auf das Aktivieren beziehungsweise Deaktivieren eines der mehreren Energiewandler des Energiewandlersystems zu verbessern. Dabei nutzt die Erfindung die Erkenntnis, dass die zwei Betriebsmodi das Betreiben des Energiewandlers mit unterschiedlichen Vorzugseigenschaften erlaubt. Je nach Bedarf kann zwischen den beiden Betriebsmodi gewechselt werden. Dadurch ist es möglich, die vorgenannten Nachteile des Stands der Technik zu reduzieren wenn nicht sogar vollständig zu überwinden.

Vorzugsweise weist der Energiewandler einen ersten Anschluss zum Anschließen an das erste elektrische Netz, einen zweiten Anschluss zum Anschließen an das zweite elektrische Netz und wenigstens eine Wandlerinduktivität auf, wobei das wenigstens eine Schaltelement mit der wenigstens einen Wandlerinduktivität elektrisch gekoppelt ist, wobei der erste und der zweite Anschluss über die wenigstens eine Wandlerinduktivität und das wenigstens eine Schaltelement miteinander elektrisch gekoppelt sind.

Der erste Betriebsmodus sieht gemäß der Erfindung die Nutzung eines PWM-Verfahrens vor. Das Akronym steht hierbei für Pulsweitenmodulation. Das PWM-Verfahren kann zur Regelung des Netzstroms des Energiewandlers genutzt werden. Es kann auch als indirektes Stromregelungsverfahren bezeichnet werden. Bei dem PWM-Verfahren wird eine Stromregelungsfunktionalität, vorzugsweise unter Nutzung eines PI-Reglers, bereitgestellt, indem eine für den gewünschten Netzstrom erforderliche Anschlussspannung beziehungsweise Ausgangsspannung berechnet wird, die dann mittels des PWM-Verfahrens bereitgestellt wird. Bei diesem Verfahren wird also der Strom nicht unmittelbar geregelt, sondern unter Vermittlung der Anschlussspannung beziehungsweise der Ausgangsspannung.

Der zweite Betriebsmodus bezieht sich auf ein direktes Regelungsverfahren. Bei diesem direkten Regelungsverfahren wird der aktuelle Netzstrom erfasst und ausgewertet, beispielsweise indem ein sogenannter Ist-Storm ermittelt wird, der dann mit einem vorgebbaren Soll-Strom beziehungsweise dem Vergleichsstrom unmittelbar verglichen werden kann. Abhängig von diesem Vergleich kann dann ein jeweiliger Schaltzustand des wenigstens einen Schaltelements ermittelt und eingestellt werden.

Da der Energiewandler im Taktbetrieb betrieben wird, ergeben sich bei beiden Verfahren regelmäßig Abweichungen vom Vergleichsstrom. Bei dem ersten Betriebsmodus wird durch entsprechendes Nachregeln der Anschlussspannung versucht, den gewünschten Netzstrom zu erreichen. Bei dem zweiten Betriebsmodus ist hingegen vorgesehen, das wenigstens eine Schaltelement dann zu schalten, wenn bei dem Vergleich eine Differenz zwischen dem erfassten Netzstrom und dem vorgebbaren Vergleichsstrom größer als ein erstes vorgebbarer Schaltwert und/oder kleiner als ein zweiter vorgebbarer Schaltwert ist. Vorzugsweise ist sowohl der erste als auch der zweite vorgebbare Schaltwert vorhanden. Sie können betragsmäßig gleich groß sein. Darüber hinaus ist der erste vorgebbare Schaltwert vorzugsweise größer als der zweite vorgebbare Schaltwert, wenn beide Schaltwerte vorhanden sind. Mit den Schaltwerten kann vorzugsweise ein Abstand zum Vergleichsstrom vorgegeben werden. Sie sind insbesondere relative Werte, die auf den Vergleichsstrom bezogen sind. Beispielsweise kann es sich bei den Schaltwerten um Differenzwerte von einem absoluten Wert in Bezug auf den Vergleichswert handeln. Dadurch kann bei dem zweiten Betriebsmodus ein sogenannter Rippelstrom hinsichtlich seiner Amplitude eingestellt werden. Bei dem ersten Betriebsmodus ist dies so nicht möglich, sodass dort der Rippelstrom entsprechend größer ausfallen kann. Es ist jedoch zu beachten, dass im ersten Betriebsmodus gegenüber dem zweiten Betriebsmodus in der Regel geringere Schaltverluste erreicht werden können. Dies ist für die Auslegung des Energiewandlers und den bestimmungsgemäßen Betrieb zu beachten.

Beide Betriebsmodi haben somit ihre individuellen Vorteile und Nachteile. Mit dem PWM-Verfahren gemäß dem ersten Betriebsmodus können somit kleine Schaltverluste, eine geringe Gesamtverzerrungsleistung, kostengünstige Filterfunktionen sowie auch ein kostengünstiges Common-Mode-Filterkonzept erreicht werden. Der zweite Betriebsmodus erlaubt hingegen eine große Dynamik und Robustheit in Bezug auf die Stromregelung, und insbesondere bei Energiewandlersystemen eine nahezu unabhängige Betriebsmöglichkeit der einzelnen Energiewandler, beispielsweise indem für die Energiewandler unterschiedliche Vergleichsströme als Soll-Werte vorgegeben werden können.

Der kennzeichnende Unterschied zwischen dem ersten und dem zweiten Betriebsmodus besteht also insbesondere in der Art und Weise, wie Schalthandlungen beziehungsweise der Schaltbetrieb des wenigstens einen Schaltelements ermittelt beziehungsweise ausgeführt werden. Bei dem ersten Betriebsmodus liegt dem Grunde nach ein Soll-Wert für die Anschlussspannung vor, der beispielsweise zuvor mittels eines insbesondere digitalen Stromreglers ermittelt wurde. Unter Nutzung einer Rechenvorschrift können dann mittels eines PWM-Modulators die entsprechenden Schalthandlungen für eine vorgegebene Schaltperiode im Voraus ermittelt werden, zum Beispiel anhand von Tabellen, Rechenvorschriften oder dergleichen. Die gewünschte Anschlussspannung kann sich dann aus einem zeitlichen Mittel von stufenweise geschalteten Einzelspannungen über eine Taktperiode der Pulsweitenmodulation ergeben. Der sich hierdurch einstellende stufenförmige Spannungsverlauf erlaubt es dann, den Netzstrom an den Vergleichsstrom anzunähern, wobei jedoch ein entsprechender Rippelstrom überlagert ist, der in der Regel mittels geeigneter Filtermaßnahmen geglättet werden kann.

Da die Schalthandlungen im Voraus bezeichnet worden sind und damit nicht unmittelbar auf den momentanen erfassten Netzstrom beziehungsweise Strom-Ist-Wert reagieren können, kann der Rippelstrom deutlich von einem Betriebspunkt sowie gegebenenfalls auch von Störgrößen abhängig sein, zum Beispiel einem Phasenwinkel bei einer Wechselspannung, einer Netzspannung, einer elektromotorischen Kraft einer elektrischen Maschine und/oder dergleichen. Darüber hinaus kann der Rippelstrom auch stark zeitabhängig sein.

Bei dem zweiten Betriebsmodus wird hingegen der Vergleichsstrom als Strom-Soll-Wert unmittelbar genutzt. Eine Kenntnis in Bezug auf die Anschlussspannung ist für dieses Funktionsprinzip nicht zwingend erforderlich. Eine Schalthandlung erfolgt hierbei vorzugsweise immer dann, wenn eine Abweichung des erfassten Netzstroms beziehungsweise des Strom-Ist-Werts vom Vergleichsstrom zu groß wird. Dieser Betriebsmodus erlaubt es darüber hinaus, das Schalthandlungen, die in der Zukunft liegen, nicht zuvor festgelegt zu werden brauchen. Der zweite Betriebsmodus erlaubt es nämlich, unmittelbar auf Änderungen des erfassten Netzstroms in Bezug auf den Vergleichsstrom zu reagieren, wodurch der Rippelstrom einen gegenüber dem ersten Betriebsmodus nahezu gleichmäßigen Verlauf annehmen kann und somit kaum vom Betriebspunkt und gegebenenfalls auftretenden Störgrößen abhängig sein braucht.

Durch die Erfindung wird also eine Kombination der Nutzung zweier unterschiedlicher Betriebsverfahren zum Betreiben des Energiewandlers beziehungsweise des Energiewandlersystems realisiert, wodurch die Vorteile beider Betriebsmodi kombiniert werden können und somit neue Anwendungsmöglichkeiten und Betriebsweisen erreicht werden können. Zugleich kann ein kostengünstiges System aus Energiewandler, Ausgangsfilter mit hohem Wirkungsgrad sowie bei Bedarf auch hochdynamischer und robuster Regelung erreicht werden.

Die Erfindung erlaubt es dadurch, netzseitige Störsituationen ohne signifikante Überstromfehler durchfahren zu können, insbesondere wenn der Energiewandler einen Netzwechselrichter bereitstellt, dessen Funktionalität durch Netzstörungen beeinträchtigt werden kann. Die Netzstörungen können zum Beispiel durch sprunghafte Änderungen der Netzspannung, von Netzimpedanzen oder dergleichen verursacht sein. Bei derartigen Störungen kann eine Regelung auf Basis des ersten Betriebsmodus zum Beispiel instabil werden, oder eine zu geringe Dynamik bereitstellen, sodass Folgefehler auftreten können.

Die Erfindung erlaubt es darüber hinaus, einen Netzwechselrichter auch als robusten Energieerzeuger und als unterbrechungsfreien Inselnetzbildner bei einem Netzausfall betreiben zu können. Ein Betrieb im zweiten Betriebsmodus erlaubt zwar eine große Robustheit, kann jedoch zugleich auch als Stromquelle wirken und ist daher bei einem Inselnetzbetrieb eher nachteilig. Im Inselnetzbetrieb ist es vorteilhaft, wenn der Energiewandler als Spannungsquelle betrieben werden kann, weshalb der erste Betriebsmodus hier vorzuziehen wäre. Der zweite Betriebsmodus wäre hier nur mit relativ hohem Aufwand in Bezug auf Messaufwand und Rechenaufwand regelbar beziehungsweise anwendbar.

Vorteilhaft ermöglicht die Erfindung auch das sogenannte Staging von Energiewandlern, insbesondere Wechselrichtern. Damit wird bezeichnet, dass bei einer Parallelschaltung von Energiewandlern beziehungsweise Wechselrichtern ein Aktivieren beziehungsweise Deaktivieren von einzelnen Energiewandlern beziehungsweise Wechselrichtern während des bestimmungsgemäßen Betriebs möglich ist. Somit kann die Anzahl der aktivierten Energiewandler beziehungsweise Wechselrichter an eine aktuell benötigte Leistung angepasst werden, sodass ein optimierter Wirkungsgrad bereitgestellt und eine Lebensdauer des hierdurch gebildeten Energiewandlersystems beziehungsweise Wechselrichtersystems erhöht werden kann. Zugleich ermöglicht es die Erfindung, ohne kostspielige galvanische Trennung der einzelnen Energiewandler beziehungsweise der einzelnen Wechselrichter, beispielsweise mittels Trenntransformatoren, beim Aktivieren beziehungsweise Deaktivieren eines einzelnen Energiewandlers beziehungsweise Wechselrichters ungünstige Übergangsvorgänge wegen beispielsweise unterschiedlicher Schalthandlungen zwischen den einzelnen Energiewandlern beziehungsweise Wechselrichtern zu vermeiden. Aufgrund des Betriebs im zweiten Betriebsmodus kann hier eine sehr schnelle Stromregelung erreicht werden, sodass die Übergangsvorgänge auch während des bestimmungsgemäßen Betriebs zuverlässig bewältigt werden können.

Vorzugsweise ist das erste Netz als Gleichspannungszwischenkreis ausgebildet und der Netzstrom ist der des zweiten Netzes. Dadurch kann der Energiewandler für eine Vielzahl von in der Technik genutzten Energiewandlungsfunktionen angepasst werden. Der Energiewandler kann zu diesem Zweck insbesondere ein Gleichspannungswandler beziehungsweise DC/DC-Wandler oder auch ein Wechselrichter oder dergleichen sein. Als Wechselrichter kann er dazu dienen, eine einphasige oder auch eine mehrphasige Wechselspannung am zweiten Anschluss bereitzustellen. Als Gleichspannungswandler kann er am zweiten Anschluss eine Gleichspannung bereitstellen.

Ferner wird vorgeschlagen, dass die Steuereinheit ausgebildet ist, während des bestimmungsgemäßen Betriebs des Energiewandlers zwischen dem ersten und dem zweiten Betriebsmodus zu wechseln. Zu diesem Zweck kann ein Algorithmus zur Zustandsüberwachung und zum Moduswechsel vorgesehen sein, mit dem jederzeit zwischen den Betriebsmodi umgeschaltet beziehungsweise gewechselt werden kann. Dadurch kann eine automatisierte Anpassung des Energiewandlers beziehungsweise des Energiewandlersystems an jeweilige Verhältnisse erreicht werden. Zu diesem Zweck können Anschlussspannungen am ersten und/oder am zweiten Anschluss sowie auch Anschlussströme am ersten und/oder am zweiten Anschluss erfasst und ausgewertet werden.

Es wird ferner vorgeschlagen, dass die Steuereinheit ausgebildet ist, einen Wechsel vom ersten Betriebsmodus in den zweiten Betriebsmodus unsynchronisiert durchzuführen. Dabei nutzt diese Weiterbildung, dass aufgrund der hohen Dynamik des zweiten Betriebsmodus ein Umschalten beziehungsweise Wechseln vom ersten Betriebsmodus in den zweiten Betriebsmodus während des bestimmungsgemäßen Betriebs des Energiewandlers gefahrlos ausgeführt werden kann. Es brauchen dem Grunde nach keine weiteren Betriebsbedingungen berücksichtigt zu werden. Die Steuereinheit kann aufgrund der erfassten Randbedingungen entscheiden, dass der Wechsel vom ersten in den zweiten Betriebsmodus sinnvoll ist und diesen nahezu unmittelbar oder zu einem gewünschten Zeitpunkt ausführen.

Ferner wird vorgeschlagen, dass die Steuereinheit ausgebildet ist, einen Wechsel vom zweiten Betriebsmodus in den ersten Betriebsmodus abhängig von einem Taktzustand des PWM-Verfahrens durchzuführen. Dieser umgekehrte Wechsel vom zweiten Betriebsmodus in den ersten Betriebsmodus kann auch während des bestimmungsgemäßen Betriebs durchgeführt werden. Hierbei sollte jedoch vorzugsweise beachtet werden, dass der Beginn des Taktzustands des PWM-Verfahrens derart berechnet beziehungsweise gegebenenfalls auch verzögert wird, bis zum Beispiel der Rippelstrom bei dem Betrieb nach dem zweiten Betriebsmodus möglichst klein wird. Insbesondere kann dadurch ein nahezu unterbrechungsfreier Moduswechsel ohne eine Pulssperre erreicht werden. Handelt es sich bei dem Energiewandler um einen Wechselrichter für eine elektrische Maschine im Motorbetrieb kann hierdurch ein nahezu kontinuierlicher Drehmomentverlauf erreicht werden. Handelt es sich dagegen um einen Netzwechselrichter, kann dadurch erreicht werden, dass keine signifikant erhöhten Oberschwingungen oder andere ungünstige Netzrückwirkungen auftreten. Zumindest kann jedoch dies reduziert werden.

Besonders vorteilhaft erweist es sich, wenn die Steuereinheit ausgebildet ist, den Wechsel zwischen dem ersten Betriebsmodus und dem zweiten Betriebsmodus unterbrechungsfrei durchzuführen. Dadurch kann ein nahezu kontinuierlicher Betrieb des Energiewandlers auch während des Wechsels zwischen den Betriebsmodi erreicht werden.

Ferner wird vorgeschlagen, dass die Steuereinheit wenigstens einen Integrator aufweist, wobei die Steuereinheit ferner derart ausgebildet ist, dass der Integrator im zweiten Betriebsmodus einen vorgebbaren Integratorzustand einnimmt. Diese Weiterbildung nutzt die Erkenntnis, dass im ersten Betriebsmodus die Regelung wenigstens einen Integrator nutzt, beispielsweise einen digitalen Integrator, um Regelabweichungen, insbesondere bleibende Regelabweichungen zu reduzieren beziehungsweise zu vermeiden. Ist der zweite Betriebsmodus aktiviert, sollte dieser Integrator zumindest angehalten werden. Eine weitere Möglichkeit besteht darin, den Integrator auf null zu setzen oder auch durch fortgeführtes Berechnen von Integralanteilen derart zu setzen, dass sich eine entsprechende Ausgangsspannung ergibt, sodass sich ein Netzstrom einstellen kann, wie er mit dem zweiten Betriebsmodus aktuell realisiert ist.

Weiterhin wird vorgeschlagen, dass der Netzstrom zeitdiskret erfasst wird, und eine Abtastrate abhängig vom jeweiligen Betriebsmodus eingestellt wird. Diese Weiterbildung nutzt die Erkenntnis, dass die Abtastrate für den zu erfassenden Netzstrom abhängig vom jeweiligen Betriebsmodus eingestellt werden kann. Für den ersten Betriebsmodus reicht es in der Regel aus, wenn eine Abtastrate in einem Bereich von zum Beispiel 5 kHz gewählt wird. Für den zweiten Betriebsmodus ist hingegen eine höhere Abtastrate zu empfehlen, die zum Beispiel bei 100 kHz liegt. Wird eine zeitdiskrete Regelung für den Netzstrom genutzt, können hier Soll-Spannungen, beispielsweise als Raumzeiger mit Betrag und Winkel, berechnet werden, aus denen der PWM-Modulator die erforderlichen Schalthandlungen für den jeweils nachfolgenden PWM-Takt berechnen kann.

Darüber hinaus wird vorgeschlagen, dass der Wechsel vom zweiten Betriebsmodus zum ersten Betriebsmodus abhängig von einem Verzerrungsanteil des Netzstroms und/oder einer Verlustleistung des Energiewandlers erfolgt. Dadurch kann vermieden werden, dass ein vorhandener Verzerrungsanteil ansonsten zunächst als Offset bestehen bleibt und von beispielsweise einer zeitdiskreten Stromregelung ausgeregelt werden muss. Dies kann zum Beispiel derart realisiert werden, indem zunächst entsprechende geeignete PWM-Impulsmuster berechnet werden und dann ein Start der Ausgabe des berechneten PWM-Impulsmusters und damit der Wechsel zwischen den Betriebsmodi verzögert wird, bis ein Stromfehler bei Betrieb im zweiten Betriebsmodus einen vorgebbaren Vergleichswert unterschreitet. Anhand der im zweiten Betriebsmodus ausgegebenen Impulsmuster kann eine aktuelle Anschlussspannung berechnet werden und diese als Startwert, beispielsweise als integraler Anteil, von der zeitdiskreten Stromregelung genutzt werden. Durch die genannten Maßnahmen können zum Beispiel Einschwingvorgänge in Bezug auf den Wechsel der Betriebsmodi reduziert werden. Sie sind jedoch nicht zwingend erforderlich.

Anstelle eines PWM-Modulators kann beispielsweise auch ein Modulator mit zuvor berechneten, optimierten Pulsmustern eingesetzt werden. Vorzugsweise sind hierdurch die Schalthandlungen für eine definierte Zeitspanne beziehungsweise einen definierten Zeitraum für die Zukunft in einem aktuellen Berechnungszyklus festgelegt und der nächste Eingriff erst nach Ablauf dieser Schaltsequenz ermöglicht. Insbesondere kann eine Taktrate des PWM-Pulsmusters nach jeder Schaltperiode geändert werden, um ein Wobbeln zu erreichen. Hierdurch kann zum Beispiel eine Störleistung spektral auf viele Frequenzen verteilt werden, sodass zum Beispiel günstigere Ausgangsfilter genutzt werden können. Dadurch kann ein Spannungs-Frequenz-Spektrum einer PWM-Modulation mit Wobbeln einem Spannungs-Frequenz-Spektrum einer direkten Stromreglung gemäß dem zweiten Betriebszustand ähnlich sein.

Es ist damit zu rechnen, dass nach einer Umschaltung beziehungsweise einem Wechsel zwischen den Betriebsmodi Einschwingvorgänge auftreten, die unterschiedliche stark ausgeprägt sein können. Diese Einschwingvorgänge können nach einer Umschaltung beziehungsweise einem Wechsel zwischen den Betriebsmodi durch eine geeignete Wahl eines Umschaltzeitpunktes beziehungsweise eines Wechselzeitpunktes und geeigneter Vorbelegungen in Bezug auf die jeweiligen Regelungen, insbesondere integraler Anteile, reduziert werden. Der Übergang von einer PWM-Modulation zur direkten Stromregelung braucht jedoch keine besonderen Anforderungen an den Umschaltzeitpunkt beziehungsweise den Wechselzeitpunkt zu stellen, weil aufgrund der hohen Dynamik der direkten Stromregelung verbleibende Stromverzerrungsanteile bei dem Wechsel innerhalb eines PWM-Taktintervalls problemlos ausgeregelt werden können. Während des ersten Betriebszustands kann der entstehende Rippelstrom erfasst werden und bei Wechsel zur direkten Stromregelung gemäß dem zweiten Betriebszustand als Startwert für eine Schalthysterese, die durch wenigstens einen der Schaltwerte gebildet sein kann, für eine Schaltfrequenzregelung genutzt werden. Je nach Aufbau kann gegebenenfalls eine Umrechnung der im ersten Betriebsmodus erfassten Werte erforderlich sein.

Die Umschaltung beziehungsweise der Wechsel vom zweiten Betriebsmodus zum ersten Betriebsmodus sollte dagegen möglichst zu einem Zeitpunkt erfolgen, bei dem ein Verzerrungsanteil im Netzstrom möglichst gering ist, weil ein vorhandener Verzerrungsanteil ansonsten zunächst als Offset bestehen bleiben würde und von der zeitdiskreten Stromregelung ausgeregelt werden müsste.

Vorzugsweise wird ferner vorgesehen, dass der erste und/oder der zweite relative Schaltwert abhängig vom vorgebbaren Vergleichsstrom gewählt werden. Hierdurch kann eine Hysterese bereitgestellt werden, innerhalb der der Rippelstrom im zweiten Betriebsmodus ist. Einer der Schaltwerte kann auch durch den Vergleichsstrom gebildet sein. Ferner kann der erste Schaltwert größer als der vorgegebene Vergleichsstrom sein, wohingegen der zweite Schaltwert kleiner als der vorgegebene Vergleichsstrom sein kann. Besonders vorteilhaft sind der erste und der zweite Schaltwert im gleichen Abstand zum Vergleichsstrom gewählt. Hierdurch kann symmetrisch zum vorgegebenen Vergleichsstrom ein Hysteresefenster erreicht werden.

Es wird ferner vorgeschlagen, dass automatisiert in den zweiten Betriebsmodus gewechselt wird, wenn eine Störung beim ersten und/oder beim zweiten elektrischen Netz ermittelt wird. Tritt eine Störung in einem jeweiligen der Netze auf, kann eine schnelle Regelungsfunktionalität mit hoher Dynamik gewünscht sein, wie sie durch den zweiten Betriebsmodus realisiert werden kann. Dadurch kann die Zuverlässigkeit des Betriebs des Energiewandlers weiter verbessert werden. Die Störung in einem der elektrischen Netze kann zum Beispiel mittels Spannungs- und/oder Strommessung am ersten beziehungsweise am zweiten Anschluss des Energiewandlers erfolgen.

Ferner wird vorgeschlagen, dass zum Bereitstellen einer Inselnetzfunktionalität des Energiewandlers das Einstellen des Netzstroms abhängig von dem Vergleichsstrom deaktiviert und der Energiewandler im ersten Betriebsmodus betrieben wird, um am entsprechenden Anschluss eine vorgegebene elektrische Anschlussspannung bereitzustellen. Die Funktionalität als Stromquelle wird in diesem Betriebszustand vorzugsweise deaktiviert, und es kann eine vorgegebene Vergleichsspannung zum Einstellen der Anschlussspannung genutzt werden. Bezüglich des Einstellens der Anschlussspannung kann ebenfalls eine Regelungsfunktionalität vorgesehen sein. Dadurch kann auf einfache Weise bei einem Netzausfall automatisiert der Inselnetzbetrieb aktiviert werden, sodass eine Energieversorgungsfunktionalität nahezu kontinuierlich bereitgestellt werden kann.

Weiterhin wird vorgeschlagen, dass zum Aktivieren oder Deaktivieren von einem der wenigstens zwei Energiewandler des Energiewandlersystems während des bestimmungsgemäßen Betriebs des Energiewandlersystems zumindest für einen vorgegebenen Zeitraum höchstens einer der Energiewandler im ersten Betriebsmodus und die übrigen der Energiewandler im zweiten Betriebsmodus betrieben werden . Natürlich können auch sämtliche der Energiewandler im zweiten Betriebsmodus betrieben werden. Ein solches Verfahren wird auch Staging genannt. Hierdurch können die während des Aktivierens beziehungsweise Deaktivierens auftretenden Ausgleichsvorgänge aufgrund der hohen Dynamik der Regelung im zweiten Betriebsmodus reduziert wenn nicht sogar vollständig unterdrückt werden. Insbesondere kann hierdurch erreicht werden, dass eine galvanische Trennung der Energiewandler, beispielsweise auf einer Wechselspannungsseite, eingespart werden kann. Dadurch können Kosten und Gewicht reduziert werden.

Die für den erfindungsgemäßen Energiewandler angegebenen Vorteile und Wirkungen gelten natürlich gleichermaßen auch für das erfindungsgemäße Energiewandlersystem sowie für die erfindungsgemäßen Verfahren und umgekehrt. Insbesondere können deshalb für Vorrichtungsmerkmale auch Verfahrensmerkmale und umgekehrt formuliert sein.

Weitere Vorteile und Merkmale ergeben sich anhand der folgenden Beschreibung von Ausführungsbeispielen anhand der beigefügten Figuren. In den FIG bezeichnen gleiche Bezugszeichen gleiche Merkmale und Funktionen.

Es zeigen:
- FIG 1: in einer schematischen Schaltbilddarstellung einen Wechselrichter als Energiewandler gemäß der Erfindung, der ausgebildet ist, eine Zwischenkreisgleichspannung als erstes elektrisches Netz mit einer dreiphasigen Wechselspannung als zweites elektrisches Netz elektrisch zu koppeln;
- FIG 2: eine schematische Blockschaltbilddarstellung für eine elektrische Antriebseinrichtung mit einem Wechselrichter gemäß FIG 1;
- FIG 3: eine schematische Schaltbilddarstellung eines Energiewandlersystems mit vier parallelgeschalteten Wechselrichtern gemäß FIG 1, die eine Zwischenkreisgleichspannung als erstes elektrisches Netz mit einer dreiphasigen Wechselspannung als zweites elektrisches Netz elektrisch koppeln;
- FIG 4: eine schematische Diagrammdarstellung für einen Netzstrom am wechselspannungsseitigen Anschluss des Wechselrichters gemäß FIG 1 für eine einzelne Phase in einem zweiten Betriebsmodus;
- FIG 5: eine schematische Diagrammdarstellung einer spektralen Energieverteilung für Netzstrom gemäß FIG 4;
- FIG 6: eine schematische Diagrammdarstellung wie FIG 4 für den Netzstrom des Wechselrichters gemäß FIG 1, jedoch hier in einem ersten Betriebsmodus des Wechselrichters; und
- FIG 7: eine schematische Diagrammdarstellung wie FIG 5 jedoch für den ersten Betriebsmodus gemäß FIG 6.

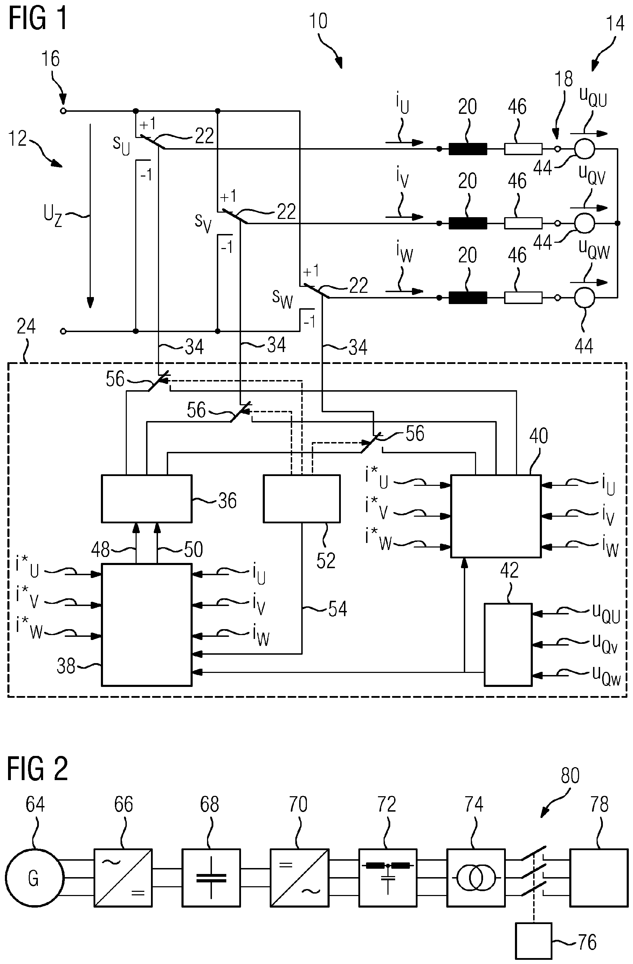

FIG 1 zeigt in einer schematischen Schaltbilddarstellung einen dreiphasigen Wechselrichter 10 als Energiewandler, mittels dem ein Gleichspannungszwischenkreis 12 als erstes elektrisches Netz mit einem dreiphasigen Wechselspannungsnetz 14 als zweitem elektrischen Netz elektrisch gekoppelt wird. Zu diesem Zweck weist der Energiewandler 10 einen ersten Anschluss 16 zum Anschließen an den Gleichspannungszwischenkreis 12 sowie einen zweiten Anschluss 18 zum Anschließen an das dreiphasige Wechselspannungsnetz 14 auf.

Für jede Phase des dreiphasigen Wechselspannungsnetzes 14 ist eine jeweilige Wandlerinduktivität 20 sowie ein mit der jeweiligen Wandlerinduktivität 20 elektrisch gekoppeltes Schaltelement 22 vorgesehen, wobei der erste Anschluss 16 über die jeweilige Kombination der jeweiligen Wandlerinduktivität 20 mit dem jeweiligen zugeordneten der Schaltelemente 22 einen jeweiligen, nicht weiter bezeichneten Phasenanschluss des zweiten Anschlusses 18 elektrisch koppelt.

Der Wechselrichter 10 umfasst ferner eine Steuereinheit 24, die über jeweilige Steuerleitungen 34 mit einem jeweiligen der Schaltelemente 22 elektrisch gekoppelt ist, sodass die Schaltelemente 22 individuell mittels Steuersignalen beaufschlagt werden können. Die Steuereinheit 24 ist ausgebildet, die Schaltelemente 22 derart in einem Schaltbetrieb zu betreiben, dass der Wechselrichter 10 eine vorgebbare Energiewandlungsfunktionalität zwischen dem ersten und dem zwischen Anschluss 16, 18 bereitstellt. In der vorliegenden Ausgestaltung ist vorgesehen, dass am zweiten Anschluss 18 ein geregelter Wechselstrom nach Art einer Stromquelle für jede Phase des Wechselspannungsnetzes 14 bereitgestellt wird. Zu diesem Zweck ist die Steuereinheit 24 ausgebildet, einen jeweiligen Netzstrom einer jeweiligen Phase am zweiten Anschluss 18 abhängig von einem Vergleich mit einem vorgebbaren Vergleichsstrom einzustellen. Die Steuereinheit 24 stellt also eine entsprechende Stromregelung bereit.

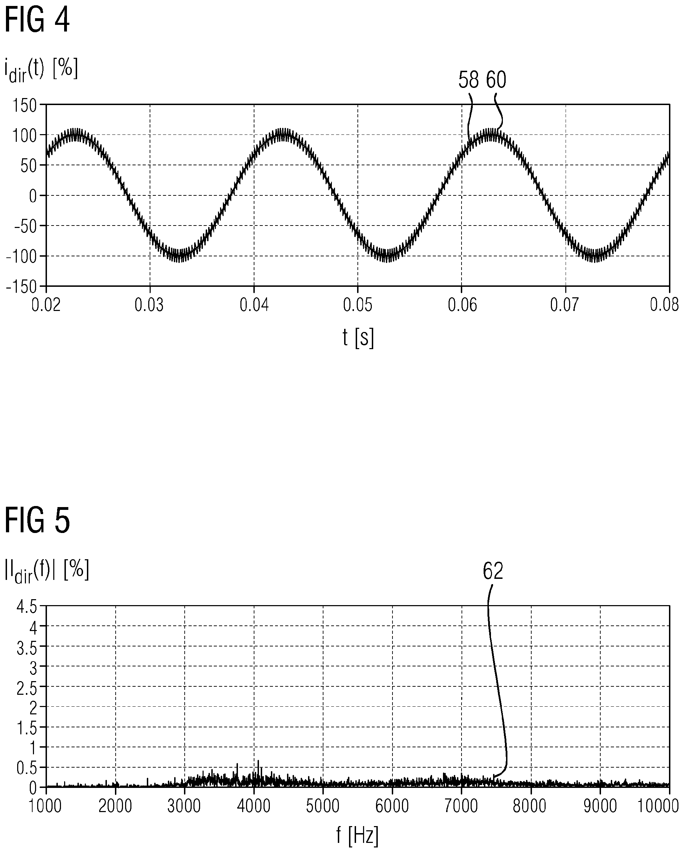

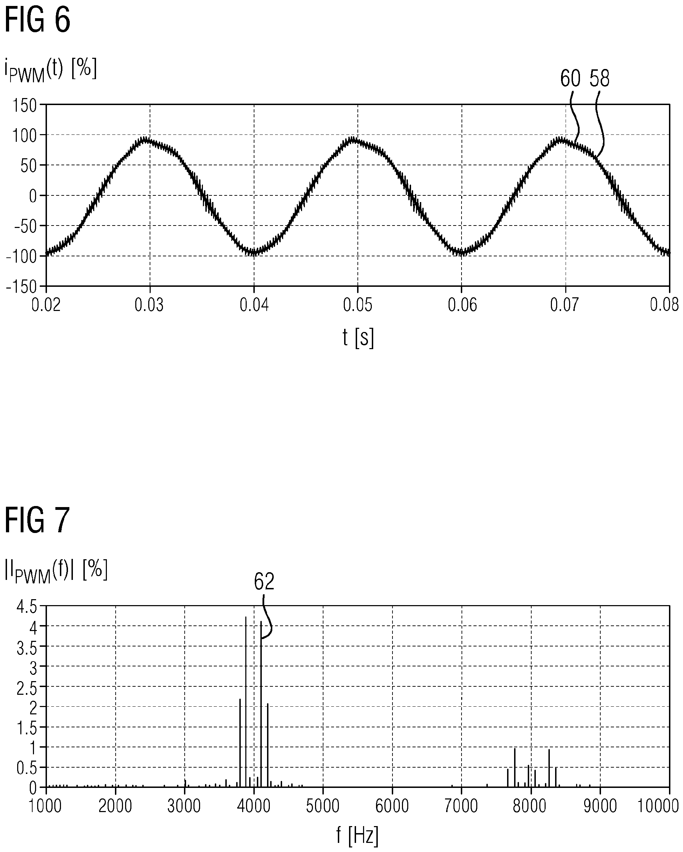

Der Vergleichsstrom ist vorliegend für jede Phase separat durch einen Soll-Wechselstrom vorgegeben. Die Steuereinheit 24 steuert nun die Schaltelemente 22 im Schaltbetrieb derart, dass durch die Wirkung der Wandlerinduktivitäten 20 der Soll-Vergleichsstrom möglichst gut angenähert werden kann. Dabei ist zu beachten, dass aufgrund des taktenden Betriebs der Schaltelemente 22 ein Stromverlauf erreicht wird, der von einem entsprechenden Rippelstrom, der durch den Schaltbetrieb der Schaltelemente 22 begründet ist, überlagert ist (FIG 4, FIG 6).

Die Steuereinheit 24 ist vorliegend ausgebildet, den Schaltbetrieb in zwei unterschiedlichen Betriebsmodi bereitzustellen. In einem ersten Betriebsmodus für den Schaltbetrieb ist vorgesehen, die elektrische Anschlussspannung am Anschluss 18 für eine jeweilige Phase des Wechselspannungsnetzes 14 mittels eines PWM-Verfahrens abhängig von dem Vergleich bereitzustellen. Zu diesem Zweck sind bezüglich des Wechselspannungsnetzes 14 Spannungssensoren 44 vorgesehen, mittels denen eine jeweilige Phase der dreiphasigen Wechselspannung des Wechselspannungsnetzes 14 erfasst werden kann. Die entsprechenden Messwerte werden über nicht dargestellte Leitungen einer Phase-Locked-Loop (PLL)-Einheit 42 zugeführt. Diese erzeugt für die weiteren Einheiten der Steuereinheit 24 Signale bezüglich jeweiliger Phasenwinkel und der Frequenz der dreiphasigen Wechselspannung des Wechselspannungsnetzes 14. Diese Signale werden einer Stromregelungseinheit 38 zum zeitdiskreten Stromregeln zugeführt.

Ferner erhält die Stromregelungseinheit 38 mittels Stromsensoren 46 erfasste jeweilige Phasenströme beziehungsweise Netzströme am zweiten Anschluss 18, und zwar iᵤ, iᵥ, i_{w}. Ferner werden der Stromregelungseinheit 38 Soll-Werte für die jeweiligen Phasenströme i*ᵤ, i*ᵥ, i*_{w} zugeführt. Hieraus ermittelt die Stromregelungseinheit 38 Werte für eine aktuelle Soll-Spannung und einen aktuellen Soll-Winkel, die über jeweilige Kommunikationsleitungen 48, 50 einen PWM-Modulator 36 der Steuereinheit 24 zugeführt werden. Der PWM-Modulator 36 erzeugt die entsprechenden Steuersignale, die über die Steuerleitungen 34 dem jeweiligen der Schaltelemente 22 zugeführt werden, sodass diese im bestimmungsgemäßen Taktbetrieb betrieben werden können.

Der erste Betriebsmodus stellt also eine indirekte Stromregelung bereit, bei der durch Einstellen der jeweiligen elektrischen Spannung am zweiten Anschluss 18 ein entsprechender Stromfluss herbeigeführt werden soll.

Wie aus FIG 1 ersichtlich ist, sind die Signalleitungen 34 nicht unmittelbar an den PWM-Modulator 36 angeschlossen, sondern stattdessen über elektronische Umschalter 56 geführt. Die elektronischen Umschalter 56 erlauben es, abhängig vom jeweils gewählten Betriebszustand die Steuersignale den Schaltelementen 22 zuzuführen. In der in FIG 1 dargestellten Schaltstellung ist der erste Betriebsmodus aktiviert, sodass die Schaltelemente 22 gemäß einem PWM-Verfahren im Schaltbetrieb betrieben werden.

FIG 1 zeigt ferner, dass die Steuereinheit eine Direktstromregelungseinheit 40 umfasst. Die Direktstromregelungseinheit 40 erhält als Eingangssignale neben der Information bezüglich des Phasenwinkels und der Frequenz von der PLL-Einheit 42 auch die erfassten Phasenströme iᵤ, iᵥ, i_{w}, die mittels der Stromsensoren 46 erfasst worden sind, sowie die entsprechenden Soll-Ströme i*ᵤ, i*ᵥ, i*_{w}, die auch der Stromregelungseinheit 38 zur Verfügung stehen. Die Direktstromregelungseinheit 40 umfasst ferner - in FIG 1 nicht dargestellt - einen ersten vorgebbaren relativen Schaltwert, der für jeden der Phasenströme iᵤ, iᵥ, i_{w} vorgegeben ist, und einen entsprechenden zweiten vorgebbaren relativen Schaltwert.

Der erste Schaltwert ist um einen vorgebbaren Abstandsbetrag zu jedem Zeitpunkt größer als der entsprechende Soll-Strom i*ᵤ, i*ᵥ, i*_{w}, wohingegen der zweite Schaltwert jeweils entsprechend kleiner ist. Die Beträge der entsprechenden Schaltwerte sind vorliegend gleich gewählt. Sie können in alternativen Ausgestaltungen jedoch auch unterschiedlich voneinander gewählt sein. Durch die Schaltwerte wird ein Hysteresebereich um den jeweiligen der Strom-Sollwerte i*ᵤ, i*ᵥ, i*_{w} bereitgestellt, der dazu dient, eine jeweilige Schalthandlung auszulösen und entsprechende Steuersignale für die Schaltelemente 22 abzugeben. Zu diesem Zweck sind für jedes der Schaltelemente 22 individuelle Steuersignale auf die elektronischen Umschalter 56 geführt. Werden die elektronischen Umschalter 56 in die jeweils andere Schaltstellung umgeschaltet, liegt eine sogenannte direkte Stromregelung gemäß dem zweiten Betriebszustand der Steuereinheit 24 vor.

Die elektronischen Umschalter 56 sind zum Zwecke des Umschaltens an eine Moduswechseleinheit 52 angeschlossen. Mittels der Moduswechseleinheit 52 können abhängig von einer Zustandsüberwachung die Betriebsmodi entsprechend umgeschaltet werden. Damit eine nahezu störungsfreie Umschaltung möglichst auch im bestimmungsgemäßen Betrieb des Wechselrichters 10 erreicht werden kann, werden sämtliche Einheiten der Steuereinheit 24 unabhängig vom jeweils aktivierten Betriebszustand aktiv gehalten. Dadurch kann nahezu beliebig zwischen den Betriebszuständen gewechselt werden.

Da die Stromregelungseinheit 38 einen nicht dargestellten Integrator umfasst, und es zum Umschalten vom zweiten Betriebszustand in den ersten Betriebszustand zweckmäßig ist, dass der Integrator nicht einen beliebigen Startwert aufweist, kann die Moduswechseleinheit 52 über eine Leitung 54 den Integrator der Stromregelungseinheit 38 mit einem vorgegebenen Startwert beaufschlagen. Dadurch kann ein verbessertes Wechseln bezüglich der unterschiedlichen zwei Betriebsmodi während des bestimmungsgemäßen Betriebs des Wechselrichters 10 erreicht werden.

Die FIG 4 bis 7 zeigen Auswirkungen des ersten und des zweiten Betriebsmodus. Die FIG 4 und 5 beziehen sich auf den zweiten Betriebsmodus, wohingegen die FIG 6 und 7 sich auf den ersten Betriebsmodus beziehen. In den FIG 4 und 6 ist die Abszisse jeweils der Zeit zugeordnet, wohingegen in den FIG 5 und 7 die Abszisse jeweils der Frequenz zugeordnet ist. In den FIG 4 bis 7 ist die Ordinate jeweils dem relativen Netzstrom einer Phase am Anschluss 18 zugeordnet.

FIG 4 zeigt für eine der Phasen repräsentativ am zweiten Anschluss 18 einen Soll-Stromverlauf mittels eines Graphen 58. Ein tatsächlicher Strom, wie er mittels des jeweiligen der Stromsensoren 46 erfasst wird, ist mittels eines Graphen 60 dargestellt. Zu erkennen ist, dass durch den ersten und den zweiten Schaltwert ein Hystereseband symmetrisch in Bezug auf den Graphen 58 bereitgestellt wird, innerhalb dessen der tatsächliche Strom der jeweiligen Phase am Anschluss 18 schwankt. Es ist also ein entsprechender Rippelstrom überlagert. FIG 5 zeigt mittels eines Graphen 62 eine relative spektrale Verteilung des Stromverlaufs gemäß FIG 4, wie er anhand des Graphen 60 dargestellt ist. Zu erkennen ist, dass eine sehr breite spektrale Verteilung gegeben ist.

FIG 6 zeigt in einer Darstellung wie FIG 4, wie sich der Stromverlauf gemäß des Graphen 60 verändert, wenn nun der erste Betriebsmodus anstelle des zweiten Betriebsmodus aktiviert ist. Zu beachten ist bei der Darstellung gemäß FIG 6, dass die Größenverhältnisse des Rippelstroms nicht genau getroffen sind. Tatsächlich ist der Rippelstrom, wie er sich anhand des Graphen 60 in FIG 6 ergibt, erheblich größer als der Rippelstrom, wie er mittels des Graphen 60 in FIG 4 dargestellt ist.

FIG 7 zeigt die entsprechende relative spektrale Verteilung im ersten Betriebsmodus gemäß FIG 6. Zu erkennen ist, dass die spektrale Energie auf im Wesentlichen zwei Spitzen konzentriert ist. Im Unterschied zum zweiten Betriebsmodus, bei dem, wie aus FIG 5 ersichtlich ist, die spektrale Energie breit verteilt ist, ist hier beim ersten Betriebsmodus die Energie schmalbandig verteilt. Sie ist zu einem großen Anteil auf die beiden Spitzen verteilt.

Im Folgenden soll nun der Betrieb des Wechselrichters 10 näher erläutert werden. Betrachtet wird im Folgenden zunächst ein Fall, dass ein selbstgeführter Netz-Wechselrichter, der vorliegend als Wechselrichter 10 ausgebildet ist, in einem Normalbetrieb im ersten Betriebsmodus betrieben wird, und zwar in einem Schaltbetrieb gemäß einem PWM-Verfahren. Dabei soll es in der vorliegenden Ausgestaltung darum gehen, eine möglichst geringe Gesamtverzerrung der Spannung am zweiten Anschluss 18 und einen möglichst hohen Wirkungsgrad zu erreichen.

Bei Auftreten einer Netzstörung, beispielsweise einer symmetrischen und einer unsymmetrischen Spannungsänderung, einem Phasensprung, einer Frequenzänderung, einer Netzimpedanzänderung, einem Phasenausfall oder dergleichen, kann die Dynamik im ersten Betriebsmodus ungenügend sein, um den Netzstrom weiterhin bestimmungsgemäß regeln zu können. In der Folge können deshalb starke Abweichungen vom Sollwert oder auch Überstrom- beziehungsweise Überspannungs-Schutzabschaltungen auftreten. Zudem wird in der Regel für die Auslegung und Parametrierung des PWM-Verfahrens eine definierte Dynamik einer Regelstrecke angenommen. Weicht die tatsächliche Regelstrecke aufgrund der Netzänderungen davon zu stark ab, so kann die Regelung instabil werden. Auch hier können Überstrom-/ Überspannungs-Schutzabschaltungen sowie unzulässige Oberschwingungen von Strömen und Spannungen die Folge sein.

Um die vorgenannte Problematik zu vermeiden, kann der Wechselrichter 10 daher wie folgt betrieben werden. Mittels der Moduswechseleinheit 52 kann eine entsprechende Betriebssituation erkannt werden, zum Beispiel aufgrund einer großen Regelabweichung, aufgrund eines Erreichens eines Strom- oder Spannungsschwellwerts, aufgrund eines externen Signals oder dergleichen. Wird eine solche schwierige Betriebssituation erkannt, veranlasst die Moduswechseleinheit 52 einen Betriebsmoduswechsel vom ersten Betriebsmodus in den hochdynamischen zweiten Betriebsmodus. Ist die schwierige Betriebssituation überwunden, beispielsweise indem Werte von Strömen und Spannungen sowie Frequenzen über einen vorgebbaren Zeitraum wieder innerhalb regulärer Grenzen sind, so kann wieder vom zweiten Betriebsmodus in den ersten Betriebsmodus zurückgewechselt werden. Da der zweite Betriebsmodus bezüglich des Wirkungsgrads ungünstiger ist, kann für den zweiten Betriebsmodus auch eine maximale zulässige Betriebsdauer vorgegeben sein. Nach Erreichen der maximalen vorgegebenen Betriebsdauer kann dann ein automatisiertes Wechseln vom zweiten Betriebsmodus in den ersten Betriebsmodus vorgesehen sein.

In der folgenden Betriebssituation wird der Fall betrachtet, dass ein Netz-Wechselrichter, der durch den Wechselrichter 10 gebildet ist, im Normalbetrieb mit direkter Stromregelung im zweiten Betriebsmodus arbeitet, weil eine robuste, hochdynamische Betriebssituation an schwankenden Netzparametern im Vordergrund steht. Dies kann zum Beispiel bei einer Energieerzeugung oder als Energiespeicher der Fall sein. Zusätzlich ist hier auch die Fähigkeit gefordert, bei einer Netzstörung nahezu unterbrechungsfrei ein Inselnetz bereitzustellen, sodass die Energieversorgung weiterhin sichergestellt werden kann.

Im Fall des Inselnetzbetriebs hat der Wechselrichter 10 die Aufgabe, die Spannung und die Frequenz im Netz zu regeln. Wirk- und Blindgrößen werden weitgehend durch die an das Inselnetz angeschlossenen Verbraucher bestimmt und sind damit für den Wechselrichter 10 zunächst unbekannt und können über die Zeit stark variieren. Eine Vorgabe eines Vergleichsstroms für eine direkte Stromregelung im ersten Betriebsmodus für sämtliche denkbaren Betriebssituationen und Lastwechsel kann somit schwierig werden und einen großen Mess- und Rechenaufwand erfordern. Eine Spannungsregelung am zweiten Anschluss 18 im ersten Betriebszustand würde in dieser Betriebssituation hingegen eine direkte Regelung für die Anschlussspannung bilden, sodass die Stromregelungseinheit 38 deaktiviert werden kann. Entsprechende Sollwerte für die Anschlussspannung, die für den PWM-Modulator 36 erforderlich sind, können dann direkt aus einer übergeordneten Regelung für die Anschlussspannung und die Frequenz kommen.

Es wird daher in dieser Situation vorgeschlagen, bei einem unterbrechungsfreien Wechsel vom zweiten Betriebsmodus in den ersten Betriebsmodus zu wechseln und die Stromregelungseinheit 38 entsprechend zu deaktivieren. Eine Rückkehr in den stromregelnden Betriebsmodus kann erfolgen, wenn kein Spannungsquellenbetrieb für die Inselnetzbereitstellung mehr benötigt wird. Dies kann beispielsweise der Fall sein, wenn eine andere Energieerzeugung die Netzbildung übernimmt und der eigene Wechselrichter 10 wieder zur Regelung zum Beispiel der Zwischenkreisgleichspannung und der Versorgung seiner Last genutzt werden kann. Oder es könnte auch ein äußeres elektrisches Netz wieder vorhanden sein, sodass das Inselnetz zunächst mit dem äußeren elektrischen Netz synchronisiert und dann elektrisch gekoppelt wird, woraufhin der Wechselrichter 10 dann unterbrechungsfrei in den stromregelnden Betrieb, insbesondere in den zweiten Betriebsmodus gewechselt werden kann.

Ein typischer Anwendungsfall hierfür ist auch, wenn der Wechselrichter 10 mit einem elektrischen Energiespeicher wie einer Batterie oder dergleichen am ersten Anschluss 16 gekoppelt ist, der zum Laden und Entladen Wirk- und Blindstrom-Sollwerte von einer übergeordneten Steuerung erhält und bei Ausfall des äußeren elektrischen Netzes unterbrechungsfrei ein Inselnetz bereitstellt.

FIG 2 zeigt in einer schematischen Blockschaltbilddarstellung einen Antriebsstrang 80. Der Antriebsstrang 80 weist eine elektrische Maschine 64 auf, die für einen dreiphasigen Betrieb ausgelegt ist. Die elektrische Maschine 64 ist an einen Energiewandler 66 angeschlossen, der seinerseits an einen Gleichspannungszwischenkreis 68 angeschlossen ist. An den Gleichspannungszwischenkreis 68 ist ferner ein weiterer Energiewandler 70 angeschlossen, der ein weiteres dreiphasiges Wechselspannungsnetz bereitstellt, welches über eine Filtereinheit 72 an einen Stromregler 74 angeschlossen ist. Der Stromregler 74 ist über ein dreiphasiges Schütz 76 an ein nicht weiter spezifiziertes elektrisches dreiphasiges Wechselspannungsnetz 78 angeschlossen.

In dieser Ausgestaltung kann der Energiewandler 66 und/oder der Energiewandler 70 durch einen Wechselrichter 10 gemäß FIG 1 gebildet sein. Der Antriebsstrang 80 kann zum Beispiel dazu dienen, in einer Fertigungsstraße eine mechanische Antriebsleistung bereitzustellen. Darüber hinaus kann der Antriebsstrang 80 auch dazu dienen, elektrische Energie von der elektrischen Maschine 64 dem elektrischen Wechselspannungsnetz 78 zuzuführen. Dieser Fall kann zum Beispiel auftreten, wenn die elektrische Maschine 64 in einem Windrad oder dergleichen angeordnet ist.

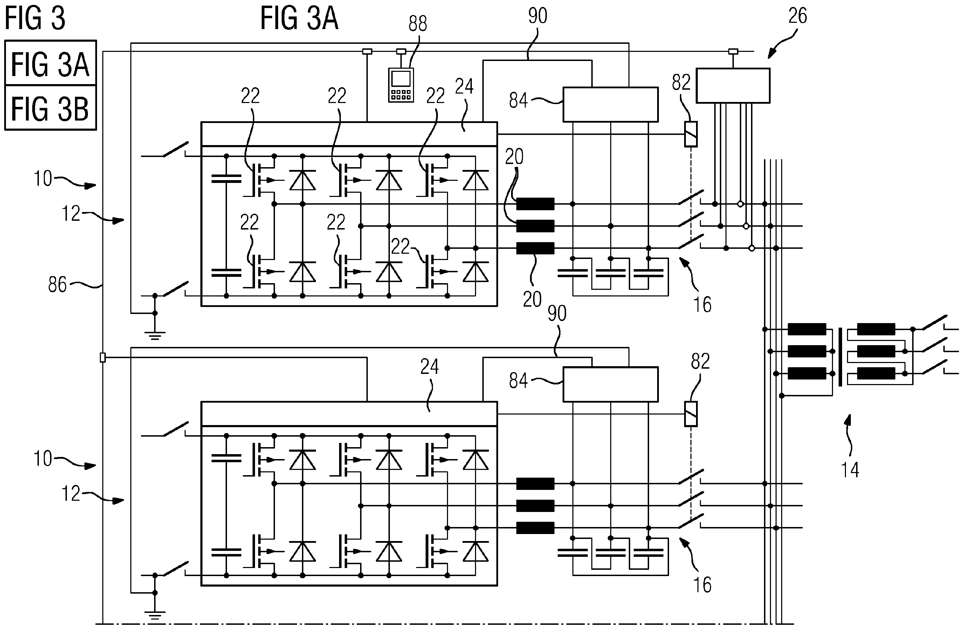

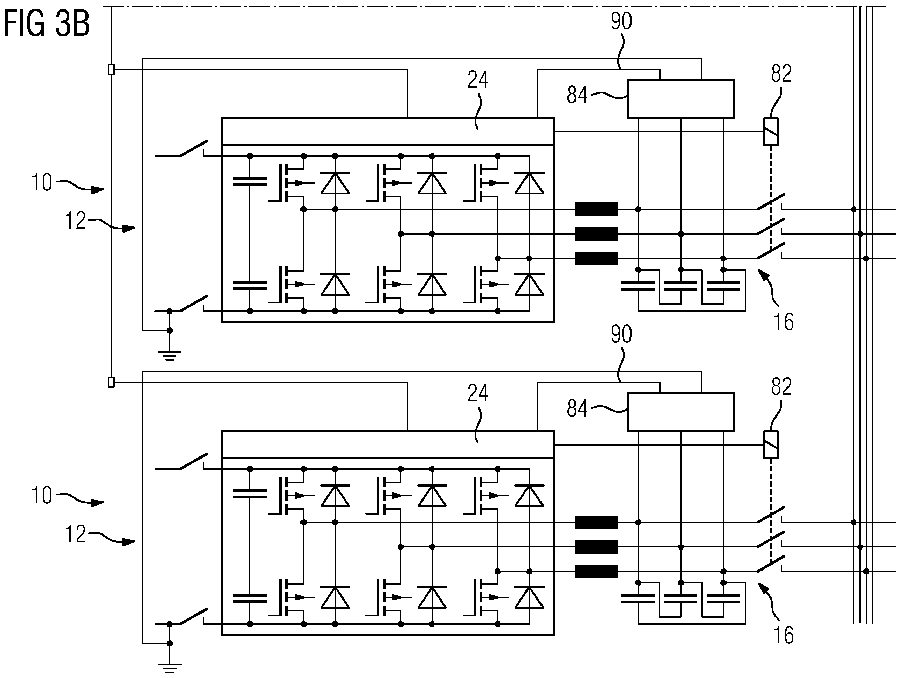

FIG 3 zeigt nun ein Energiewandlersystem 26 mit vier parallelgeschalteten Wechselrichtern 10, wie sie bereits anhand von FIG 1 erläutert worden sind. Die jeweiligen ersten Anschlüsse 16 sind an einen Gleichspannungszwischenkreis 12 gemeinsam parallel angeschlossen. Entsprechend sind die jeweiligen zweiten Anschlüsse der Wechselrichter 10 an ein dreiphasiges Wechselspannungsnetz 14 parallel angeschlossen. In den Wechselrichtern 10 sind die Schaltelemente 22 vorliegend durch Halbbrückenschaltungen von Feldeffekttransistoren, und zwar vorliegend Insulated Gate Bipolar Transistoren (IBGT) gebildet. Die Funktion dieser Halbbrückenschaltungen ist im Stand der Technik umfänglich bereits diskutiert, weshalb von detaillierten Erläuterung in Bezug auf die Energiewandlung vorliegend abgesehen wird.

Die jeweiligen zweiten Anschlüsse 18 der Wechselrichter 10 sind über ein jeweiliges dreiphasiges Schütz 82 mit dem dreiphasigen Wechselspannungsnetz 14 elektrisch gekoppelt. Dadurch können die Wechselrichter 10 wahlweise vom Wechselspannungsnetz 14 getrennt werden. Zu erkennen ist ferner, dass die Steuereinheiten 24 über ein BUS-System 86 mit einem Bedienfeld 88 kommunikationstechnisch gekoppelt sind. Das BUS-System 86 ist vorliegend durch einen Profi-BUS als Feld-BUS gebildet.

An die jeweiligen zweiten Anschlüsse 18 sind ferner jeweilige Sensoreinrichtungen 84 angeschlossen, die über eine jeweilige Leitung 90 an die jeweilige Steuereinheit 24 angeschlossen sind. Über die Leitung 90 werden die entsprechenden Sensorsignale an die Steuereinheit 24 übermittelt. Die Steuereinheit 84 ermittelt jeweilige Phasenspannungen und Phasenströme am jeweiligen der zweiten Anschlüsse 18.

Im Folgenden wird der Fall betrachtet, dass das Energiewandlersystem 26 im Normalbetrieb derart betrieben wird, dass seine Wechselrichter 10 im ersten Betriebsmodus betrieben werden, um eine möglichst geringe Gesamtverzerrung der Spannung an den jeweiligen Anschlüssen 18 und einen möglichst hohen Wirkungsgrad bei der Parallelschaltung der Wechselrichter 10 erreichen zu können.

Das Energiewandlersystem 26 ist ausgebildet, ein sogenanntes Staging zu realisieren. Hierbei können, um eine Maximalleistung der Gesamtanordnung an einen momentanen tatsächlichen Leistungsbedarf anpassen zu können, nicht benötigte Wechselrichter 10 abgeschaltet und mittels des Schützes 82 vom Netz getrennt werden. Dadurch kann der Wirkungsgrad des Energiewandlersystems 26 bei Teilleistung deutlich verbessert und die Lebensdauer erhöht werden, weil die Betriebsstunden für die einzelnen Wechselrichter 10 reduziert werden können.

Zum Zuschalten beziehungsweise Abschalten eines einzelnen der Wechselrichter 10 muss dieser für eine kurze Übergangszeit während des Strombereitstellens beziehungsweise des Stromabbaus zu null, und zwar während das Schütz 82 noch im eingeschalteten Schaltzustand ist, andere Ströme führen können, als die anderen aktivierten Wechselrichter 10. Dies erfordert es, dass unterschiedliche Schaltmuster beziehungsweise Ausgangsspannungen der einzelnen Wechselrichter 10 ermöglicht werden müssen, die wiederum hohe zirkulierende Ströme verursachen können, die von dem ersten Betriebsmodus kaum beherrscht werden können. Im Stand der Technik ist es an dieser Stelle üblich, kostenintensive Trenntransformatoren zur Unterbindung derartiger zirkulierender Ströme einzusetzen.

Mit der Erfindung kann erreicht werden, dass die kostenintensiven Trenntransformatoren eingespart werden können. Dadurch kann der Staging-Einsatz nicht nur für wenige Spezialanwendungen erreicht werden, sondern es eröffnet sich dadurch ein viel breiteres Einsatzgebiet, insbesondere bei Standardanwendungen, in Bezug auf die Nutzung der Vorteile bezüglich des Teillastbetriebs.

Um das Zuschalten beziehungsweise Abschalten eines einzelnen Wechselrichters 10 zu ermöglichen, wird vorliegend vorgeschlagen, sämtliche der Wechselrichter 10 im zweiten Betriebsmodus zu betreiben, das heißt, vom ersten Betriebsmodus in den zweiten Betriebsmodus zu wechseln. Die hohe Dynamik der direkten Stromregelung des zweiten Betriebsmodus ermöglicht einen Parallelbetrieb auch bei unsynchronisierten Schaltbefehlen bezüglich der Schaltelemente 22. Insbesondere kann erreicht werden, dass Stromvergleichswerte für den abzuschaltenden Wechselrichter 10 mit einer Rampenfunktion zu null geführt werden können. Erst dann wird das Schütz 82 geöffnet. Nach Ablauf einer Öffnungszeit, zum Beispiel Auswertung eines Rückmeldesignals oder dergleichen, können die weiter aktiven Wechselrichter 10 dann wieder in den ersten Betriebsmodus zurückwechseln.

Für das Zuschalten eines einzelnen der Wechselrichter 10 werden zunächst die bereits aktiveren Wechselrichter 10 in den zweiten Betriebsmodus versetzt. Das gleiche gilt auch für den zuzuschaltenden Wechselrichter 10. Das betreffende Schütz 82 wird geschlossen und der Strom des zusätzlichen Wechselrichters kann nun über eine Rampenfunktion auf die Vergleichsströme der bereits aktiven Wechselrichter 10 geführt werden. Dabei ist zu beachten, dass deren Vergleichsströme natürlich entsprechend verringert werden, sodass der vorgebbare Gesamtstromwert erreicht werden kann. Sobald alle aktiven Wechselrichter 10 die gleichen Vergleichsströme erhalten, kann dann in den jeweils ersten Betriebsmodus zurückgewechselt werden.

Zu beachten ist, dass insbesondere im Dauerbetrieb bei parallelgeschalteten Wechselrichtern 10 der zweite Betriebsmodus speziell angepasste Netzfilter erfordern kann. Andernfalls können erhebliche zusätzliche Bauteilbelastungen und Verluste auftreten. Zu diesem Zweck wird vorgeschlagen, für das Zuschalten beziehungsweise Abschalten einzelner Wechselrichter 10 einen jeweiligen Zeitraum vorzugeben, der zum Beispiel 50 ms bis etwa 500 ms betragen kann. Innerhalb dieses Zeitraums kann dann das jeweilige Zuschalten beziehungsweise Abschalten ausgeführt werden. Die sich hierbei ergebenden ungünstigen Effekte können dadurch reduziert werden, sodass Anpassungen von Netzfiltern weitgehend vermieden werden können. Dies betrifft insbesondere auch eine Common-Mode-Induktivität im Netzfilter sowie auch eine aktive Dämpfung mit schneller Spannungsmessung im Netzfilter.

Die Beschreibung der Ausführungsbeispiele dient ausschließlich der Erläuterung der Erfindung und soll diese nicht beschränken. Natürlich können Merkmale der Beschreibung nahezu beliebig miteinander kombiniert werden.

## Patentansprüche

1. Energiewandler (10) zum elektrischen Koppeln eines ersten elektrischen Netzes (12) mit einem zweiten elektrischen Netz (14) mit:
- wenigstens einem Schaltelement (22), und
- eine mit dem wenigstens einen Schaltelement (22) elektrisch gekoppelte Steuereinheit (24), die ausgebildet ist, das wenigstens eine Schaltelement (22) derart in einem Schaltbetrieb zu betreiben, dass der Energiewandler (10) eine vorgebbare Energiewandlungsfunktionalität bereitstellt, und wobei die Steuereinheit (24) ausgebildet ist, einen Netzstrom für eines der elektrischen Netze (12, 14) abhängig von einem Vergleich des Netzstroms mit einem vorgebbaren Vergleichsstrom einzustellen,
**dadurch gekennzeichnet, dass**
die Steuereinheit (24) ausgebildet ist,
- einen ersten Betriebsmodus für den Schaltbetrieb zum Einstellen einer elektrischen Spannung an dem einen der Netze (12, 14) mittels eines PWM-Verfahrens abhängig von dem Vergleich bereitzustellen, und
- einen zweiten Betriebsmodus für den Schaltbetrieb bereitzustellen, in dem das wenigstens eine Schaltelement (22) dann geschaltet wird, wenn bei dem Vergleich eine Differenz zwischen dem Netzstrom und dem vorgebbaren Vergleichsstrom größer als ein erster vorgebbarer relativer Schaltwert und/oder kleiner als ein zweiter vorgebbarer relativer Schaltwert ist.

2. Energiewandler nach Anspruch 1, **dadurch gekennzeichnet, dass** das erste Netz (12) als Gleichspannungszwischenkreis ausgebildet ist und der Netzstrom der des zweiten Netzes (14) ist.

3. Energiewandler nach Anspruch 1 oder 2, **dadurch gekennzeichnet, dass** die Steuereinheit (24) ausgebildet ist, während des bestimmungsgemäßen Betriebs des Energiewandlers (10) zwischen dem ersten und dem zweiten Betriebsmodus zu wechseln.

4. Energiewandler nach Anspruch 3, **dadurch gekennzeichnet, dass** die Steuereinheit (24) ausgebildet ist, einen Wechsel vom ersten Betriebsmodus in den zweiten Betriebsmodus unsynchronisiert durchzuführen.

5. Energiewandler nach Anspruch 3 oder 4, **dadurch gekennzeichnet, dass** die Steuereinheit (24) ausgebildet ist, einen Wechsel vom zweiten Betriebsmodus in den ersten Betriebsmodus abhängig von einem Taktzustand des PWM-Verfahrens durchzuführen.

6. Energiewandler nach einem der Ansprüche 3 bis 5, **dadurch gekennzeichnet, dass** die Steuereinheit (24) ausgebildet ist, den Wechsel zwischen dem ersten Betriebsmodus und dem zweiten Betriebsmodus unterbrechungsfrei durchzuführen.

7. Energiewandler nach einem der vorhergehenden Ansprüche, **dadurch gekennzeichnet, dass** die Steuereinheit (24) wenigstens einen Integrator aufweist, wobei die Steuereinheit (24) ferner derart ausgebildet ist, dass der Integrator im zweiten Betriebsmodus einen vorgebbaren Integratorzustand einnimmt.

8. Energiewandlersystem (26) zum elektrischen Koppeln eines ersten elektrischen Netzes (12) mit einem zweiten elektrischen Netz (14), mit wenigstens zwei Energiewandlern (10), die jeweils an das erste elektrische Netz (12) und an das zweite elektrische Netz (14) anschließbar sind,
**dadurch gekennzeichnet, dass**
die Energiewandler (10) nach einem der vorhergehenden Ansprüche ausgebildet sind.

9. Verfahren zum Betreiben eines Energiewandlers (10), der ein erstes elektrisches Netz (12) mit einem zweiten elektrischen Netz (14) elektrisch koppelt, indem der Energiewandler (10) elektrische Energie mittels wenigstens einem Schaltelement (22) wandelt, wobei:
- das wenigstens eine Schaltelement (22) derart in einem Schaltbetrieb betrieben wird, dass der Energiewandler (10) eine vorgegebene Energiewandlungsfunktionalität bereitstellt, und
- ein Netzstrom für eines der Netze (12, 14) abhängig von einem Vergleich des Netzstroms mit einem vorgegebenen Vergleichsstrom eingestellt wird,
**dadurch gekennzeichnet, dass**
- ein erster Betriebsmodus für den Schaltbetrieb bereitgestellt wird, bei dem eine elektrische Spannung an dem einen der Netze (12, 14) mittels eines PWM-Verfahrens abhängig von dem Vergleich eingestellt wird, und
- ein zweiter Betriebsmodus bereitgestellt wird, bei dem das Schaltelement (22) dann geschaltet wird, wenn bei dem Vergleich eine Differenz zwischen dem Netzstrom und dem vorgegebenen Vergleichsstrom größer als ein erster vorgegebener relativer Schaltwert und/oder kleiner als ein zweiter vorgegebener relativer Schaltwert ist.

10. Verfahren nach Anspruch 9, **dadurch gekennzeichnet, dass** der Netzstrom zeitdiskret erfasst wird, und eine Abtastrate abhängig vom jeweiligen Betriebsmodus eingestellt wird.

11. Verfahren nach Anspruch 9 oder 10, **dadurch gekennzeichnet, dass** der Wechsel vom zweiten Betriebsmodus zum ersten Betriebsmodus abhängig von einem Verzerrungsanteil des Netzstroms und/oder einer Verlustleistung des Energiewandlers erfolgt.

12. Verfahren nach einem der Ansprüche 9 bis 11, **dadurch gekennzeichnet, dass** der erste und/oder der zweite relative Schaltwert abhängig vom vorgegebenen Vergleichsstrom gewählt werden.

13. Verfahren nach einem der Ansprüche 9 bis 12, **dadurch gekennzeichnet, dass** automatisiert in den zweiten Betriebsmodus gewechselt wird, wenn eine Störung beim ersten und/oder beim zweiten elektrischen Netz (12, 14) ermittelt wird.

14. Verfahren nach einem der Ansprüche 9 bis 13, **dadurch gekennzeichnet, dass** zum Bereitstellen einer Inselnetzfunktionalität des Energiewandlers (10) das Einstellen des Netzstroms abhängig von dem Vergleichsstrom deaktiviert und der Energiewandler (10) im ersten Betriebsmodus betrieben wird, um an dem entsprechenden der Netze (12, 14) eine vorgegebene elektrische Anschlussspannung bereitzustellen.

15. Verfahren zum Betreiben eines Energiewandlersystems (26), mit dem ein erstes elektrisches Netz (12) mit einem zweiten elektrischen Netz (14) mittels wenigstens zwei Energiewandlern (10) elektrisch gekoppelt wird, die jeweils an das erste elektrische Netz (12) und an das zweite elektrische Netz (14) angeschlossen sind,
**dadurch gekennzeichnet, dass**
die Energiewandler (10) nach einem Verfahren der Ansprüche 9 bis 14 betrieben werden.

16. Verfahren nach Anspruch 15, **dadurch gekennzeichnet, dass** zum Aktivieren oder Deaktivieren von einem der wenigstens zwei Energiewandler (10) während des bestimmungsgemäßen Betriebs des Energiewandlersystems (26) zumindest für einen vorgegebenen Zeitraum höchstens einer der Energiewandler (10) im ersten Betriebsmodus und die übrigen der Energiewandler (10) im zweiten Betriebsmodus betrieben werden.
